# EUROPÄISCHE PATENTANMELDUNG

(11) **EP 1 679 241 A2**
(43) Veröffentlichungstag der Anmeldung: **12.07.2006**
(21) Anmeldenummer: 06000234.2
(22) Anmeldetag: 06.01.2006
(51) Int. Cl.: B60S 1/02, B60S 1/54, B60H 1/22

(54) **Heizgerät, insbesondere für Scheiben eines Kraftfahrzeugs**

(30) Priorität: 11.01.2005 DE 102005001778
(71) Anmelder: Grothe, Wolfgang, 57250 Netphen (DE)
(72) Erfinder: Grothe, Wolfgang, 57250 Netphen (DE)
(74) Vertreter: COHAUSZ DAWIDOWICZ HANNIG & SOZIEN

(57) **Zusammenfassung**

Die Erfindung betrifft ein Heizgerät, insbesondere für ein Kraftfahrzeug mit einem Antriebsmotor und Außenscheiben, das mittels lösbaren Befestigungselementen (7) in einem Abstand zu einer Scheibe, insbesondere einer Windschutzscheibe, insbesondere nachrüstbar befestigbar ist, insbesondere wobei die Stromversorgung über den Zigarettenanzünder erfolgt.

## Beschreibung

### Heizgerät insbesondere für Scheiben eines Kraftfahrzeuges

Die Erfindung betrifft ein elektrisch betriebenes Heizgerät, um Scheiben in Fahrzeugen, z.B. Windschutzscheiben beim PKW, komfortabel zu enteisen und ein erneutes Zufrieren, zum Beispiel während der Fahrt, zu verhindern. Die Erfindung verhindert gleichermaßen ein Beschlagen der Scheiben.

Es ist bekannt, Scheiben von PKW und LKW mittels der Temperier- und Lüftungseinrichtung der Fahrzeuge auf Temperaturen über den Gefrierpunkt bzw. über den Taupunkt zu bringen. Die Wärme wird dazu dem Kühlkreislauf der Motoren, bzw. den Standheizungen entnommen. In DE20304546 wird eine elektrische Zusatzheizung innerhalb der Lüftungskanäle beschrieben. Ferner sind Verfahren zum Heizen der Scheiben mittels in die Scheibe integrierter Heizdrähte bekannt.

Die Systeme, die indirekt die Scheiben erwärmen sind träge, speziell in der Aufwärmphase der Motoren / Standheizungen und wirken nicht zielgerichtet. Die Systeme mit integrierten Heizungen finden im Frontscheibenbereich keine Anwendung, aufgrund der störenden Optik.

Die praktischen Ergebnisse der derzeitigen Methoden sind, speziell nach starken Frostnächten, dass Frontscheiben bis zum Erreichen ausreichender Motor- und Innenraumtemperaturen von Außen und oder von Innen wieder zufrieren und eine sichere Sicht verhindern. Die gleichen Sichtprobleme treten, bei hohen relativen Feuchten und unzureichenden Lüftungstemperaturen, durch permanentes Beschlagen auf.

Aufgabe der Erfindung ist es, ein schnell wirksames, sicheres Heizgerät zum Auftauen bzw. Abtrocknen von Kraftfahrzeugscheiben zur Verfügung zu stellen, welches nachrüstbar, betriebssicher, preiswert und formschön ist. Darüber hinaus soll die Erfindung ähnliche Aufgaben in anderen Einsatzbereichen abdecken.

Diese Aufgabe wird gelöst durch die Merkmale des Anspruches 1. Vorteilhafte Ausführungsformen ergeben sich aus den Unteransprüchen.

Wesentlicher Gegenstand der Erfindung ist somit ein insbesondere nachrüstbares Heizgerät, das mittels bevorzugt wieder lösbarer Befestigungselemente, nahe der Scheiben, insbesondere in optimierter Position und bevorzugt von einem Nutzer gewünschten Position befestigt werden kann. Die Befestigungselemente sind z.B. ausgebildet als Saugnäpfe und/oder Klebeflächen und/oder Schraubverbindungen.

Das Heizgerät wirkt durch Wärmeübertragung auf die Scheibe und zwar bevorzugt sowohl durch Strahlung als auch durch Konvektion. Hierbei kann beispielsweise durch das Heizgerät ein aus den fahrzeugseitigen Lüftungsanlagen austretender Luftstrom erwärmt werden. Es kann auch vorgesehen sein, dass das Heizgerät einen Lüfter oder ein Gebläse umfasst, um einen Luftstrom auszubilden, insbesondere dessen Richtung einstellbar ist.

Die Heizleistung wird elektrisch zur Verfügung gestellt. Als Stromquelle kann z.B. das Bordnetz des Kraftfahrzeuges (z.B. über den Zigarettenanzünder), sowie externe Quellen dienen. Hierbei kann es vorgesehen sein, an einer Leitung zur Stromzuführung eine Zugentlastung vorzusehen, die durch ein lösbares Befestigungsmittel, z.B. einen Saugnapf, gebildet sein kann. Das Befestigungsmittel kann bevorzugt in der Umgebung des Eintritts der Stromzuführung in das Gehäuse des Heizgerätes angeordnet sein. Das Heizgerät kann auch in weiterer Ausführung mit einer Steuerung ausgestattet sein, über die die Betriebspunkte entweder manuell oder automatisch einstellbar sind.

Durch das erfindungsgemäße Heizgerät ist ein schnelles und nachhaltiges Aufwärmen der Scheiben zum Auftauen und/oder Temperieren über die Taupunkttemperatur gewährleistet. Dadurch wird eine freie Sicht ermöglicht, was beim Einsatz in Kraftfahrzeugen deutlich die Verkehrssicherheit erhöht.

Durch die Auslegung, die Form und das Herstellverfahren ist ein Gerät realisierbar, das betriebssicher, formschön, preiswert und nachrüstbar für alle Kraftfahrzeuge ist.

Ausführungsbeispiele der Erfindung sind in den Figuren dargestellt und werden im Folgenden näher beschrieben.

Es zeigen:
- Figur 1:: die Anordnung und das Funktionsschema.
- Figur 2 + 3:: mögliche bauliche Ausführung des Heizgerätes.

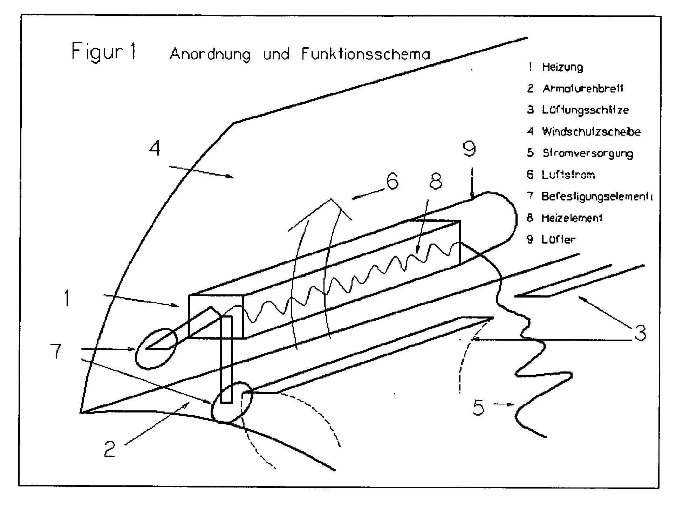

Die Figur 1 zeigt ein elektrisches Heizgerät (1), das in dieser beispielhaften Ausführung oberhalb des Armaturenbrettes (2) vor der Windschutzscheibe (4) eines Fahrzeugs mit Befestigungselementen (7) (z.B. Saugnäpfe) in einem Abstand befestigt ist.

Durch die lösbaren Befestigungselemente kann die gewünschte Position durch den Nutzer optimiert werden. Der Luftstrom (6) aus den Lüftungsschlitzen im Armaturenbrett (3) oder dem optionalen externen am Heizgerät angeordneten Lüfter (9) wird von einem im Heizgerät (1) angeordneten Heizelement (8) erwärmt und trifft auf die Scheibe. Die Stromversorgung erfolgt z.B. mittels eines flexiblen Kabels (5).

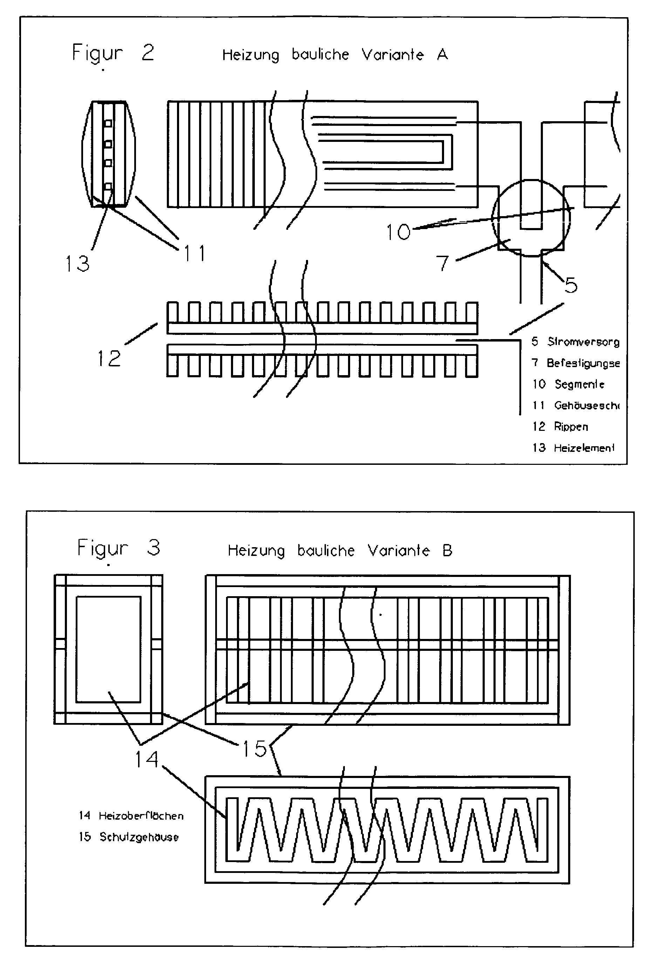

Die Figur 2 zeigt ein Heizgerät, welches in seiner Größe und Geometrie der Einbauumgebung angepasst ist. Ein Heizelement 13 dieser Ausführung kann ein, zwei oder mehrere Heizsegmente (10) umfassen, die ggfs. übereinander und/oder nebeneinander angeordnet werden können. Das Heizgerät kann ein- oder mehrteilige Schale/n (11), insbesondere zwei Halbschalen umfassen, insbesondere zwischen denen das Heizelement (13) und ggfs. die mehreren Heizsegmente (10) des Heizelementes angeordnet sein können. Die Oberflächen des Heizgerätes und/oder des Heizelementes sind hier rippenförmig ausgebildet. Das Heizelement (13) befindet sich, mechanisch und elektrisch geschützt zwischen den Gehäuseschalen (11). Das Stromkabel (5) ist mit einer Zugentlastung in Form eines separaten Befestigungselementes (7) versehen.

Die Figur 3 zeigt eine Ausführung bei der ein Heizelement als gewelltes Blech oder Folie ausgebildet ist, wodurch sich eine erheblich vergrößerte Heizoberfläche (14) ergibt. Das Heizelement ist berührungsgeschützt innerhalb des Heizgerätes. Insbesondere zwischen zwei Halbschalen angeordnet, z.B. aufgehängt.

Der gewünschte Widerstand zur Erzeugung der nötigen Heizleistung kann hier erreicht werden durch passende Dimensionierung von Länge und Querschnitt des Heizelementes. Hierbei ist es vorteilhaft, dass sich durch die Wellung eines Bleches neben der vergrößerten Oberfläche auch eine hohe effektive Länge bei geringer baulicher Länge ergibt.

## Patentansprüche

1. Heizgerät, insbesondere für ein Kraftfahrzeug mit einem Antriebsmotor und Außenscheiben, **dadurch gekennzeichnet, dass** es mittels lösbaren Befestigungselementen (7) in einem Abstand zu einer Scheibe, insbesondere einer Windschutzscheibe, insbesondere nachrüstbar befestigbar ist, insbesondere wobei die Stromversorgung über den Zigarettenanzünder erfolgt.

2. Heizgerät nach einem der vorherigen Ansprüche, **dadurch gekennzeichnet, dass** ein Heizelement ein oder mehrere Heizsegmente umfasst.

3. Heizgerät nach einem der vorherigen Ansprüche, **dadurch gekennzeichnet, dass** die Wärmeübertragung zur Scheibe erfolgt durch Strahlung im Infrarot oder durch Strahlung oder Konvektion zur Luft an der Außenseite oder den Innenflächen des Heizgeräts.

4. Heizgerät nach einem der vorherigen Ansprüche, **dadurch gekennzeichnet, dass** es in einem Abstand zwischen 0 cm und 10 cm zu einer Scheibe befestigbar ist und/oder in den Luftstrom eines fahrzeugseitigen Lüftungsgebläses positionierbar ist, insbesondere wodurch die Wärmeübertragung auf die Scheibe flächig erfolgt.

5. Heizgerät nach einem der vorherigen Ansprüche, **dadurch gekennzeichnet, dass** die Heizleistung zwischen 100 W und 1000 W liegt, insbesondere wobei die Wärmeleistung der Heizung durch einen Ohmschen Widerstand eines Heizelementes erzeugt wird, dessen Gesamtwiderstand zwischen 0,1 Ohm und 6 Ohm oder zwischen 50 Ohm und 60 Ohm liegt.

6. Heizgerät nach einem der vorherigen Ansprüche, **dadurch gekennzeichnet, dass** die Leistung regelbar ist, wobei eine Regelung zur Vermeidung von Übertemperaturen vorgesehen ist, insbesondere durch Kaltleiter und/oder die Regelung das Heizgerät abschaltet, falls die Betriebsspannung, insbesondere die Bordspannung eines Kraftfahrzeuges unter einen Schwellwert fällt.

7. Heizgerät nach einem der vorherigen Ansprüche, **dadurch gekennzeichnet, dass** die Oberflächentemperatur des Heizgerätes auf maximal 60 Grad Celsius begrenz ist, und insbesondere zwischen 10 °C und 60°C liegt.

8. Heizgerät nach einem der vorherigen Ansprüche, **dadurch gekennzeichnet, dass** ein Heizelement und/oder eine Gehäuseschale eine rippenförmige Oberfläche aufweist.

9. Heizgerät nach einem der vorherigen Ansprüche, **dadurch gekennzeichnet, dass** ein Heizelement gebildet ist aus:
• wenigstens einem Draht, einer Folie oder einem Blech, insbesondere der/die/das mäanderförmig zwischen zwei Gehäuseschalen angeordnet ist, insbesondere in diese eingepresst ist oder aus
• einer Widerstandspaste, insbesondere die zwischen zwei Gehäuseschalen aufgetragen ist, insbesondere wobei die Widerstandspaste in eine vorgegebene Form des Heizungskorpus, insbesondere zweier Gehäuseschalen eingebracht ist.

10. Heizgerät nach einem der vorherigen Ansprüche, **dadurch gekennzeichnet, dass** auf ein Heizelement, insbesondere eine Folie / ein Blech ein Widerstandselement aufgedampft ist.

11. Heizgerät nach einem der vorherigen Ansprüche, **dadurch gekennzeichnet, dass** in dem Heizungskorpus, insbesondere in wenigstens einer Gehäuseschale ein Labyrinth zur Aufnahme des Heizelementes angelegt ist.

12. Heizgerät nach einem der vorherigen Ansprüche, **dadurch gekennzeichnet, dass** die Gehäuseschalen wärmeleitfähig sind, insbesondere durchbrochen, und/oder hinreichend flexibel und/oder selbst tragend sind, wobei die Gehäuseschalen aus Metall, Keramik oder Kunststoff bestehen, und insbesondere durch Gießen, Formen, Tiefziehen oder Spritzen hergestellt sind, insbesondere wobei an den Gehäuseschalen angeformte Schnappelemente zum Zusammenbau vorgesehen sind.
